# EUROPÄISCHE PATENTSCHRIFT

(11) **EP 0 611 725 B1**
(45) Veröffentlichungstag und Bekanntmachung des Hinweises auf die Patenterteilung: **27.12.1996**
(21) Anmeldenummer: 94102435.8
(22) Anmeldetag: 17.02.1994
(51) Int. Cl.: B66C 23/42, B66C 23/62

(54) **Kranfahrzeug**
Vehicle mounted crane
Grue montée sur un vehicule

(30) Priorität: 18.02.1993 DE 9302376 U
(43) Veröffentlichungstag der Anmeldung: 24.08.1994
(73) Patentinhaber: EC Engineering + Consulting Spezialmaschinen GmbH, D-89079 Ulm (DE)
(72) Erfinder: Kaspar, Ernst, D-89597 Munderkingen (DE)
(74) Vertreter: Grünecker, Kinkeldey, Stockmair & Schwanhäusser Anwaltssozietät

(56) Entgegenhaltungen:
- EP-A- 0 325 064
- EP-A- 0 543 276
- DE-A- 2 142 750
- DE-A- 2 300 643
- DE-A- 2 455 961
- DE-A- 2 837 398
- DE-A- 3 640 183
- DE-U- 9 001 589
- FR-A- 2 181 565
- GB-A- 2 056 407
- GB-A- 2 066 430
- GB-A- 2 082 984
- GB-A- 2 218 397
- US-A- 4 984 695

## Beschreibung

Die Erfindung betrifft ein Kranfahrzeug der im Oberbegriff des Anspruchs 1 angegebenen Gattung (siehe DE-A-2 142 750).

Gattungsgemäße Kranfahrzeuge erfreuen sich einer großen Beliebtheit, da sie sich selbst auf öffentlichen Straßen fortbewegen und demzufolge rasch an wechselnden Einsatzorten zur Verfügung gestellt werden können.

Dem Bedürfnis nach immer größeren Hubhöhen und immer schwereren zu hebenden Lasten stehen jedoch Bestimmungen der in Deutschland geltenden Straßenverkehrszulassungordnung (STVZO) entgegen, welche das Gesamtgewicht, die Achslastverteilung, den dem Fahrer zur Verfügung stehenden Sichtkreis und vieles andere festlegt.

Ferner stehen der technisch durchaus möglichen Vergrößerung der Kranfahrzeugabmessungen Hindernisse entgegen, wie die Durchfahrtshöhe von Straßenbrücken oder die Einfahrtshöhe von Fabrikhallen. Außerdem verlangen beengte räumliche Verhältnisse auf Baustellen oder innerhalb von Fabrikationsanlagen Zurückhaltung bei der Dimensionierung von Höhe, Länge und Breite der Kranfahrzeuge.

Der Erfindung liegt deshalb die Aufgabe zugrunde, ein gattungsgemäßes Kranfahrzeug so auszugestalten, daß es vielseitig auch bei engen räumlichen Verhältnissen einsetzbar, gut und rasch von Ort zu Ort bewegbar und trotz geringer Abmessungen besonders leistungsfähig ist.

Diese Aufgabe wird erfindungsgemäß durch das im Anspruch 1 angegebene Kranfahrzeug gelöst.

Der mit Hilfe des erfindungsgemäßen Kranfahrzeuges erzielbare technische Fortschritt ergibt sich in erster Linie daraus, daß die Fahrzeugkonstruktion zu einer besonders niedrigen Bauhöhe führt, wodurch niedrige Straßenbrücken und niedrige Hallentore mühelos unterfahren werden können, daß das erfindungsgemäße Kranfahrzeug autobahntauglich im Sinne der Straßenverkehrszulassungsordnung (STVZO) ist, d.h., eine Mindestreisegeschwindigkeit von 62 km/h gestattet und dabei für Fahrgeschwindigkeiten von oberhalb 62 km/h eine mechanische Lenkeinwirkung auf die zu lenkenden Fahrzeugräder gewährleistet. Ferner ermöglicht die Konstruktion des erfindungsgemäßen Kranfahrzeuges durch tiefes Ablegen des Kranmastes sowie durch eine kurze Grundmastlänge des Kranmastes trotz der niedrigen Bauhöhe den nach der STVZO geforderten Sichtkreisdurchmesser mit einem Radius R ≦ 12 m.

An der erfindungsgemäßen Konstruktion, die zu der vorteilhaft niedrigen Bauhöhe führt, hat die Anordnung einer gemeinschaftlichen Motoreinrichtung sowohl für den Fahrbetrieb als auch für den Kranbetrieb im hinteren Ende des Drehtisches einen besonderen Anteil. Diese Anordnung von Fahrantrieb und Kranantrieb im Drehtisch, also im wesentlichen oberhalb der hinteren Fahrzeugräder ermöglicht zum einen das Anordnen des Fahrzeugrahmens im wesentlichen in Höhe der Mittelpunkte der Fahrzeugräder und gestattet zum anderen die Verminderung des im bzw. am Drehtisch erforderlichen Gegengewichtes um das Gewicht des Motors für den Fahr- und Kranantrieb.

Einen wesentlichen Anteil am Ermöglichen der vorteilhaften niedrigen Bauhöhe des erfindungsgemäßen Kranfahrzeuges haben die in die Naben der Fahrzeugräder integrierten hydrostatischen Einzelantriebe (Hydromotoren), die keine Verbindung zum Fahrzeugrahmen per Gelenkwellen oder dgl. erfordern und es somit ermöglichen, daß der Fahrzeugrahmen im wesentlichen auf die Höhe der Radnaben abgesenkt werden konnte.

Ferner ermöglicht die Verbolzbarkeit der Fahrerkabine mit dem Unterwagen bei Fahrbetrieb zusammen mit der hydraulisch entriegelbar ausgebildeten, geteilten Lenkspindel das Befahren von Schnellstraßen, wie Autobahn, im Einklang mit der Straßenverkehrszulassungsordnung (STVZO).

Vorteilhafte Ausgestaltungen der Erfindung sind in den Unteransprüchen angegeben.

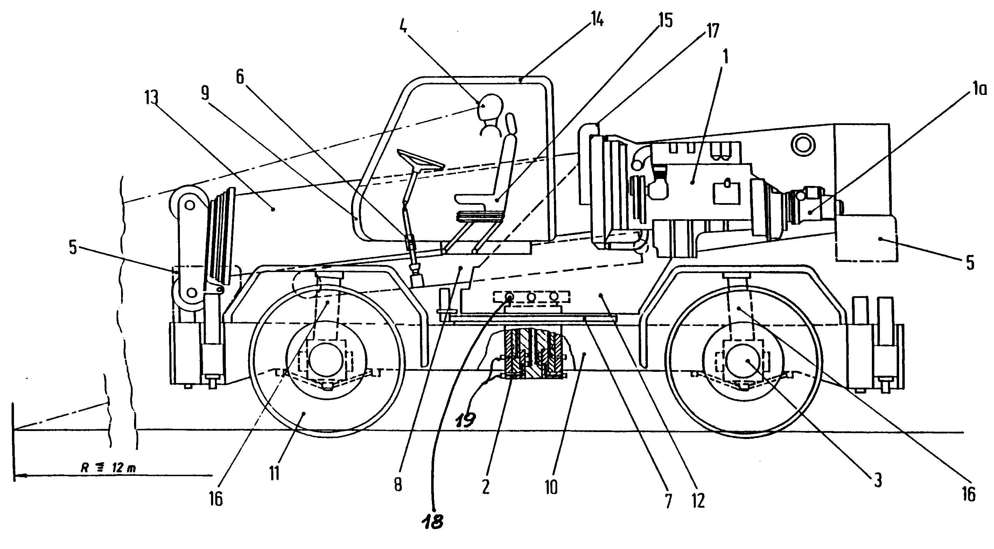

Die Erfindung wird nachfolgend anhand eines Ausführungsbeispieles sowie unter Bezug auf die einzige Zeichnung näher beschrieben, welche schematisch eine Ansicht des erfindungsgemäßen Kranfahrzeuges zeigt.

Wie in der Zeichnung dargestellt, weist das Kranfahrzeug einen biege- und torsionsteifen Fahrzeugrahmen 10 auf, an welchem paarweise Räder 11 einzeln aufgehängt sind. Das dargestellte Fahrzeug besitzt bis zu einer Nominallast von 35/40 t lediglich zwei Radpaare, um die angestrebte kurze Baulänge zu gewährleisten. Höhere Nominallasten von z.B. 70 t sind dank der erfindungsgemäßen Konstruktion mit nur drei Radpaaren realisierbar, wohingegen nach dem Stand der Technik solche hohen Nominallasten nur mit Hilfe von (wenigstens) vier Achsen realisiert werden können.

Die Räder 11 sind wenigstens zum Teil mit Hilfe einer Lenkeinrichtung lenkbar, die eine teilbare Lenkspindel 6 aufweist. Diese teilbare Lenkspindel ist hydraulisch entriegelbar und verriegelbar und gewährleistet, daß ein mechanischer Lenkeingriff besteht, wenn sich das Kranfahrzeug mit Geschwindigkeiten von mehr als 62 km/h auf öffentlichen Straßen (Autobahnen) bewegt.

Ferner ist ein horizontal verschwenkbar am Fahrzeugrahmen 10 gelagerter Drehtisch 12 vorgesehen, dessen nicht dargestellte Drehachse im Bereich einer später noch zu beschreibenden Drehdurchführung 2 für die Radantriebe angeordnet ist.

Im hinteren Bereich des Drehtisches 12 ist oberhalb der hinteren Hälfte des Fahrzeugrahmens, d.h., im wesentlichen oberhalb des hinteren Radpaares ein kombinierter Fahr- und Kranmotor 1 vorgesehen. Dieser Antriebsmotor für den Fahrbetrieb und für den Kranbetrieb ist vorzugsweise als Dieselmaschine ausgelegt und treibt eine Fahrpumpe 1a für Hydrauliköl. Durch nicht dargestellte Schläuche gelangt das Hydrauliköl von der Fahrpumpe 1a zu der Drehdurchführung 2 und von dort zu den hydrostatischen Radantrieben 3. Die Versorgung der hydrostatischen Radantriebe mit Hydrauliköl erfolgt entweder durch jedem Rad 11 zugeordnete Federzylinder 16 oder durch die im einzelnen nicht dargestellte Radaufhängung der angetriebenen Fahrzeugräder.

Die Drehdurchführung 2 ist im Fahrzeugrahmen 10 vorgesehen, der an dieser Stelle ausgeschnitten, aber konstruktiv hinreichend verstärkt ausgebildet ist. Die Drehdurchführung 2 liegt genau mittig in bezug auf den Kugeldrehkranz 7, welcher die Verbindung zwischen Fahrzeugrahmen 10 und Drehtisch 12 darstellt.

Die Drehdurchführung 2 besteht prinzipiell aus zwei Teilen, die sich gegeneinander verdrehen können, wobei eines dieser Teile am Fahrzeugrahmen 10 befestigt ist und das andere drehbewegliche Teil vom Drehtisch 12 mitgenommen wird. Die erste fest mit dem Fahrzeugrahmen 10 verbundene Baugruppe der Drehdurchführung 2 ist in der Zeichnung engschraffiert (Schraffur von links unten nach rechts oben) dargestellt, wohingegen die drehfest mit dem Drehtisch 12 verbundene zweite Baugruppe der Drehdurchführung in der Zeichnung breitschraffiert (Schraffur von links oben nach rechts unten) dargestellt ist.

In der sich mit dem Drehtisch 12 drehenden zweiten Baugruppe sind Ölzuführungskanäle ausgebildet, die mit ihren oberen Enden an Hydrauliköleinlässe angeschlossen sind, von welchen in der Zeichnung schematisch drei, mit dem Bezugszeichen 18 bezeichnet, dargestellt sind. Diese Ölzuleitungskanäle münden jeweils in einen Ringkanal, der zu dem jeweils angrenzenden Bauteil der rahmenfesten ersten Baugruppe offen ist. In diese Ringkanäle (der drehbeweglichen Baugruppe) öffnen sich jeweils Hydraulikölzuleitungen, die in den rahmenfesten Teilen ausgebildet sind und durch welche das Öl aus den jeweiligen Ringkanälen zur Außenoberfläche der rahmenfesten Baugruppe strömt.

Mit Hilfe dieser Konstruktion ist gewährleistet, daß, unabhängig von der jeweiligen Drehstellung der drehbeweglichen Baugruppe, relativ zur rahmenfesten Baugruppe ein unbehinderter Hydraulikölfluß von den Hydrauliköleinlässen 18 der drehbeweglichen Baugruppe bis zu den Auslaßanschlüssen der rahmenfesten Baugruppe gewährleistet ist. Diese Hydraulikölauslaßanschlüsse sind in der Zeichnung schematisch dargestellt, wobei zwei von diesen mit den Bezugszeichen 19 bezeichnet sind.

Um große Hydraulikölmengen trotz relativ geringer Höhe der Ringkanäle zu bewältigen, sind in der drehbeweglichen Baugruppe vier Ölzuleitungskanäle dargestellt, wozu die rahmenfeste Baugruppe zweischalig ausgebildet ist, von welcher die innere Schale rechtwinklig abknickend von innen nach außen geführt ist, um die in der Zeichnung dargestellten vier Öldurchlässe zu den vier in der Zeichnung dargestellten Ölauslaßanschlüssen 19 zu transportieren.

Zur Rückführung des Hydrauliköls von den Verbrauchern, wie den hydrostatischen Radantrieben 3 zum Hydrauliköltank, sind in der Drehdurchführung gesonderte Rückführungs-Öldurchführungen und Rückführungs-Ringkanäle vorgesehen, die dem gleichen Konstruktionsprinzip gehorchen, wie die vorstehend beschriebene Durchführung des Hydrauliköls durch die Baugruppen der Durchführung 2. In der Zeichnung sind lediglich vier Ringkanäle des Ölrückführungssystems zu erkennen, da die zugehörigen Ölzuführungen nicht in der Schnittebene verlaufen.

Mit dem Drehtisch 12 verbunden und an diesem vertikal verschwenkbar angelenkt ist ein teleskopierbarer Kranmast 13, der im dargestellten Ausführungsbeispiel einen Grundmast und sieben ein- und ausschiebbare Teleskopteile aufweist. Der Kranmast 13 wird mit Hilfe eines Wippzylinders 8 aus seiner in der Zeichnung dargestellten Ruhe- und Transportposition in seine Arbeitsposition (nicht dargestellt) aufgestellt. Mit seinem nicht unbeträchtlichen Eigengewicht wirkt der Fahr- und Kranmotor 1 mit als Gegengewicht für den Kranmast 13. Die entsprechend den Spezifikationen der Kranfahrzeughersteller vorgeschriebene Masse des Gegengewichtes, die im bzw. am Drehtisch 12 angeordnet ist, kann somit um die Masse des Fahr- und Kranmotors 1 verringert werden, wodurch sich das Gesamtgewicht des Kranfahrzeuges um das Gewicht des Fahr- und Kranmotors 1 vermindert. Wäre der Fahr- und Kranmotor 1 nicht im Drehtisch 12 angeordnet, so müßte ein zusätzlich mitgeführtes Gegengewicht für den Kranbetrieb um das Gewicht der Motoreinrichtung 1 schwerer ausgebildet sein.

Die vorstehend erläuterte Herabsetzung des Fahrzeug-Gesamtgewichtes durch Anordnung des Fahr- und Kranmotors im Drehtisch ermöglicht es der erfindungsgemäßen Konstruktion für Hubleistungen und Auflegerlängen, die im Stand der Technik drei Achsen erfordern, mit lediglich zwei Achsen auszukommen, wie in der Zeichnung dargestellt. Der Entfall einer dritten Achse ermöglicht jedoch die angestrebte geringe Gesamtlänge des Kranfahrzeuges nach der Erfindung.

Ferner weist das Kranfahrzeug eine in Fahrtrichtung vor dem Fahr- und Kranmotor 1 angeordnete Fahrerkabine 14 mit darin angeordnetem Fahrersitz 15 auf.

Der Fahrzeugrahmen 10 ist im wesentlichen auf die Höhe der Mittelpunkte der Räder 11 abgesenkt, wobei wenigstens ein Teil der Räder mit den vorstehend genannten hydrostatischen Einzelantrieben 3 versehen ist, welche wiederum im Bereich der Naben der angetriebenen Räder 11 angeordnet sind.

Die Fahrerkabine 14 kann im Fahrbetrieb mit dem Unterwagen verbolzt werden, was im wesentlichen zusammen mit dem hydraulischen Verriegeln der geteilten Lenkspindel 6 erfolgt, um den von der Straßenverkehrszulassung geforderten mechanischen Lenkeingriff zu gewährleisten, wenn Fahrgeschwindigkeiten von mehr als 62 km/h erreicht werden.

Der Kranmast 13 ist mit seinem vorderen Ende auf den tiefgelegten Fahrzeugrahmen 10 ablegbar. Ferner weist der Kranmast eine so geringe Grundmastlänge auf, daß die Kranmastlänge im wesentlichen der Länge des Fahrzeugrahmens entspricht.

Wie in der Zeichnung mit dem Bezugszeichen 4 dargestellt, hat der Fahrer in Fahrtposition des Kranfahrzeuges eine uneingeschränkte Rundumsicht innerhalb des von der Straßenverkehrszulassungsordnung geforderten Sichtkreisradius von maximal 12 m. Diese uneingeschränkte Rundumsicht für den Fahrer ist um so mehr hervorzuheben, als sie nicht etwa durch Erhöhung der Fahrerposition, sondern trotz der Realisierung einer überraschend geringen Fahrzeug-Bauhöhe erreicht worden ist.

Ein zusätzliches Gegengewicht 5 für den Kranbetrieb kann im Fahrbetrieb im vorderen Bereich des Kranfahrzeuges, vorzugsweise auf dem vorderen Endabschnitt des Fahrzeugrahmens 10 abgelegt werden. Im Kranbetrieb kann das zusätzliche Gegengewicht 5 am hinteren Ende des Drehtisches 12 angeordnet werden, wie in der Zeichnung strich-punktiert dargestellt. Wäre, wie vorstehend erörtert, der Fahr- und Kranmotor 1 nicht im Drehtisch 12 angeordnet, so müßte das zusätzliche Gegengewicht 5 um das Gewicht des Motors 1 schwerer ausgebildet sein, um die nach dem üblichen Krantabellen benötigten Gegengewichte aufzubringen.

Die Fahrerkabine 14 besitzt ein abnehmbares Oberteil, um die Gesamthöhe des Kranfahrzeuges im Bedarfsfall herabsetzen zu können. Ferner ist der in der Fahrerkabine vorgesehene Fahrersitz 15 so weit ablenkbar, daß der Kopf des Fahrers unter die höchste Fahrzeugkante 17 bewegbar ist.

Das Hydrauliköl wird den hydrostatischen Radantrieben 3 - wie schon erwähnt - über die Drehdurchführung 2 zugeführt. Dabei erfolgt die Zuführung des Hydrauliköls zu den jeweiligen angetriebenen Fahrzeugrädern 11 entweder durch die jedem Rad zugeordneten Federzylinder 16 oder durch die jedem Rad zugeordnete Radaufhängung, falls keine Federzylinder vorgesehen sind.

## Patentansprüche

1. Kranfahrzeug mit einem biege- und torsionssteifen Fahrzeugrahmen (10) sowie Ober- und Unterwagen, mit an dem Fahrzeugrahmen einzeln aufgehängten Rädern (11), die wenigstens zum Teil mittels einer Lenkeinrichtung lenkbar sind, mit einem horizontal verschwenkbar am Fahrzeugrahmen (10) gelagerten Drehtischen (12) und einem mit dem Drehtisch verschwenkbaren und zudem vertikal verschwenkbaren teleskopierbaren Kranmast (13) und mit Motoreinrichtungen (1) für den Fahrbetrieb und für den Kranbetrieb sowie einer Fahrerkabine (14) mit darin vorgesehenem Fahrersitz,
dadurch **gekennzeichnet,** daß
- der Fahrzeugrahmen (10) im wesentlichen auf die Höhe der Mittelpunkte der Räder (11) abgesenkt ist,
- daß wenigstens ein Teil der Räder (11) mit hydrostatischen Einzelradantrieben (3) versehen ist, welche im Bereich der Radnaben angeordnet sind,
- daß die Motoreinrichtungen (1) für den Fahrbetrieb sowie für den Kranbetrieb oberhalb des Fahrzeugrahmens (10) und zwar im Bereich der hinteren Hälfte desselben in dem Drehtisch (12) angeordnet sind,
- daß die Fahrerkabine (14) vor den Motoreinrichtungen (1) am Drehtisch (12) befestigt ist, wobei die Fahrerkabine im Fahrbetrieb mit dem Unterwagen verbolzbar ist,
- daß im Bereich der Fahrerkabine (14) eine geteilte Lenkspindel (6) vorgesehen ist, die für den Fahrbetrieb mechanisch mit der Lenkeinrichtung der Räder (11) verriegelbar ist und
- daß der Kranmast (13) mit seinem vorderen Ende auf den tiefliegenden Fahrzeugrahmen (10) ablegbar ist und eine Grundmastlänge aufweist, die im wesentlichen der Länge des Fahrzeugrahmens (10) entspricht.

2. Kranfahrzeug nach Anspruch 1, dadurch gekennzeichnet, daß die gemeinsam im Drehtisch (12) angeordneten Motoreinrichtungen (1) für Fahr- und Kranbetrieb eine Hydrauliköl-Fahrpumpe (1a) aufweisen, welche mit den hydrostatischen Radantrieben (3) verbunden ist, wobei im Bereich der im Fahrzeugrahmen (10) gelagerten Drehachse des Drehtisches (12) eine Drehdurchführung (2) für das Hydrauliköl vorgesehen ist, von welcher das Hydrauliköl den Radantrieben (3) zuführbar ist.

3. Kranfahrzeug nach Anspruch 1 oder 2, dadurch gekennzeichnet, daß ein ortsbewegliches zusätzliches Gegengewicht (5) für den Kranbetrieb vorgesehen ist, welches im Fahrbetrieb im Bereich des vorderen Endes des Fahrzeugrahmens (10) ablegbar ist und welches im Kranbetrieb im Bereich des hinteren Endes des Drehtisches (12) befestigbar ist.

4. Kranfahrzeug nach einem der Ansprüche 1 bis 3, dadurch gekennzeichnet, daß die Fahrzeugkabine (14) ein abnehmbares Oberteil aufweist und daß der in der Fahrzeugkabine vorgesehene Fahrersitz (12) so weit absenkbar ist, daß der Kopf des Fahrers unter die höchste Fahrzeugkante (17) bewegbar ist.

5. Kranfahrzeug nach Anspruch 1 oder 2, dadurch gekennzeichnet, daß den hydrostatischen Radantrieben (3) Hydrauliköl durch jedem Rad (11) zugeordnete Federzylinder (16) zuführbar ist.

6. Kranfahrzeug nach Anspruch 1 oder 2, dadurch gekennzeichnet, daß den hydrostatischen Radantrieben (3) Hydrauliköl durch eine jedem Rad (11) zugeordnte Radaufhängung zuführbar ist.

## Claims

1. A crane vehicle comprising a deflection-resistant and torsion-proof vehicle frame (10) as well as superstructure and chassis, wheels (11) which are individually suspensed on said vehicle frame and which can be steered at least partly by means of a steering means, a turntable (12) supported in a horizontally pivotable manner on said vehicle frame (10), and a telescopic crane boom (13) which can be pivoted along with said turntable and, in addition, in a vertical direction, and motor means (1) for travel operation and for crane operation, as well as a driver's cab (14) with a driver's seat provided therein,
**characterized in** that
- said vehicle frame (10) is substantially lowered to the level of the centers of said wheels (11);
- at least part of said wheels (11) are provided with hydrostatic individual wheel drives (3) which are arranged in the area of the wheel hubs,
- that said motor means (1) for travel operation and for crane operation are arranged above said vehicle frame (10), i.e., in the area of the rear half thereof in said turntable (12),
- that said driver's cab (14) is secured upstream of said motor means (1) to said turntable (12), said driver's cab being adapted to be bolted to the chassis during travel operation;
- that a split steering spindle (6) which is mechanically lockable for travel operation with the steering means of said wheels (11) is provided in the area of said driver's cab (14), and
- that said crane boom (13) can be placed with its front end on the lower vehicle frame (10) and has a basic boom length substantially corresponding to the length of said vehicle frame (10).

2. A crane vehicle according to claim 1, characterized in that said motor means (1) which are jointly arranged in said turntable (12) for travel operation and for crane operation comprise a hydraulic oil travel pump (1a) which is connected to said hydrostatic wheel drives (3), with the area of the rotational axis of said turntable (12) within said vehicle frame (10) having provided therein a rotary leadthrough (2) for said hydraulic oil for supplying said hydaulic oil from said leadthrough to said wheel drives (3).

3. A crane vehicle according to claim 1 or 2, characterized in that a locally movable additional counterweight (5) is provided for crane operation, said counterweight being adapted to be placed in the area of the front end of said vehicle frame (10) in the travel mode and being adapted to be secured in the area of the rear end of said turntable (12) during crane operation.

4. A crane vehicle according to any one of claims 1 to 3, characterized in that said driver's cab (14) has a removable top and that said driver's seat (15) which is provided in said driver's cab is adapted to be lowered to such a degree that the driver's head is movable below the highest vehicle edge (17).

5. A crane vehicle according to claim 1 or 2, characterized in that hydraulic oil can be supplied to said hydrostatic wheel drives (3) through spring cylinders (16) assigned to each wheel (11).

6. A crane vehicle according to claim 1 or 2, characterized in that hydraulic oil can be supplied to said hydrostatic wheel drives (3) through a wheel suspension assigned to each wheel (11).

## Revendications

1. Grue montée sur un véhicule avec un châssis (10) de véhicule, rigide en flexion et en torsion, ainsi qu'un châssis supérieur et un châssis inférieur, avec des roues (11) qui sont suspendues individuellement au châssis du véhicule et qui sont dirigeables au moins en partie au moyen d'un mécanisme de direction, avec un plateau tournant (12), monté sur le châssis (10) de véhicule de manière à pouvoir pivoter horizontalement, et un mât télescopique (13) de grue, pivotant verticalement, qui peut pivoter avec le plateau tournant, et avec des moyens moteurs (1), pour le fonctionnement du véhicule et pour le fonctionnement de la grue, ainsi qu'une cabine (14) de conducteur à l'intérieur de laquelle un siège de conducteur est prévu,
caractérisé en ce que,
- le châssis (10) de véhicule est globalement abaissé à la hauteur des centres des roues (11),
- au moins une partie des roues (11) est munie de commandes hydrostatiques (3) individuelles de roues qui sont placées dans la zone des moyeux,
- les moyens moteurs (1) pour le fonctionnement du véhicule et pour le fonctionnement de la grue sont placés au-dessus du châssis (10) de véhicule et dans la zone de la moitié arrière de ce même châssis dans le plateau tournant (12),
- la cabine (14) de conducteur est fixée devant les moyens moteurs (1) sur le plateau tournant (12), la cabine de conducteur pouvant être boulonnée au châssis inférieur lorsque le véhicule roule,
- un arbre de direction (6) en plusieurs parties est prévu dans la zone de la cabine (14) du conducteur, cet arbre de direction pouvant être verrouillé mécaniquement au mécanisme de direction des roues (11) lorsque le véhicule doit rouler, et
- le mât (13) de la grue peut être placé avec son extrémité avant sur le châssis (10) de véhicule abaissé et il a une longueur de mât principal qui correspond globalement à la longueur du châssis (10) de véhicule.

2. Grue montée sur un véhicule selon la revendication 1, caractérisé en ce que les moyens moteurs (1) regroupés dans le plateau tournant (12) pour le fonctionnement du véhicule et de la grue comportent une pompe (1a) à huile hydraulique qui est liée aux commandes hydrostatiques (3) de roues, un passage tournant (2) pour l'huile hydraulique, à partir duquel l'huile hydraulique peut être conduit jusqu'aux commandes (3) de roues, étant prévu dans la zone de l'axe de rotation, monté dans le châssis (10) de véhicule, du plateau tournant (12).

3. Grue montée sur un véhicule selon la revendication 1 ou 2, caractérisé en ce qu'un contrepoids (5) supplémentaire et pouvant être déplacé est prévu pour le fonctionnement de la grue, ce contrepoids pouvant être placé dans la zone de l'extrémité avant du châssis (10) de véhicule lorsque le véhicule roule et pouvant être fixé dans la zone de l'extrémité arrière du plateau tournant (12) lorsque la grue fonctionne.

4. Grue montée sur un véhicule selon l'une des revendications 1 à 3, caractérisé en ce que la cabine (14) du véhicule comporte une partie supérieure amovible et le siège du conducteur prévu dans la cabine (12) du véhicule peut être abaissé jusqu'à ce que la tête du conducteur puisse bouger en dessous du bord (17) le plus haut du véhicule.

5. Grue montée sur un véhicule selon la revendication 1 ou 2, caractérisé en ce que de l'huile hydraulique peut être conduite aux commandes hydrostatiques (3) de roues à travers un cylindre à ressort (16) associé à chaque roue (11).

6. Grue montée sur un véhicule selon la revendication 1 ou 2, caractérisé en ce que de l'huile hydraulique peut être conduite aux commandes hydrostatiques (3) de roues à travers une suspension de roue associée à chaque roue (11).
